# EUROPEAN PATENT APPLICATION

(11) **EP 2 096 287 A2**
(43) Date of publication of application: **02.09.2009**
(21) Application number: 09007860.1
(22) Date of filing: 01.08.2005
(51) Int. Cl.: F02D 41/02, F02P 5/15, F02P 5/152, F02D 41/14, B60W 30/18, F02D 41/00, F02D 41/08, F02D 41/16

(54) **Torque calculation method for engine**

(30) Priority: 04.08.2004 JP 2004228103
(62) Divisional of application: 05254808.8
(71) Applicant: Toyota Jidosha Kabushiki Kaisha, Toyota-shi, Aichi-ken 471-8571 (JP); Bosch Corporation, Shibuya-ku Tokyo 150-8360 (JP)
(72) Inventor: Amano, Naoki, Toyota-shi Aichi-ken 471-8571 (JP); Otsubo, Massaki, Toyota-shi Aichi-ken 471-8571 (JP); Yamazaki, Akinori, Shibuya-ku Tokyo 150-8360 (JP); Hatakeyama, Tomohiro, Shibuya-ku Tokyo 150-8360 (JP)
(74) Representative: Smith, Samuel Leonard

(57) **Abstract**

A torque calculation method for an engine (100) connected to an automatic transmission (300), wherein torque of the engine (100) is controlled based on first engine torque that is calculated based on a rotational speed of the engine (100); and the first engine torque is corrected so that the rotational speed during idling becomes equal to a predetermined rotational speed, the torque calculation method being characterized by comprising:
calculating second engine torque which is used for control of the automatic transmission (300), based on the first engine torque; and
correcting the second engine torque based on a correction amount of the first engine torque.

## Description

### BACKGROUND OF THE INVENTION

### 1. Field of the Invention

The invention relates to a torque calculation method for an engine, and more particularly to a torque calculation method for an engine connected to an automatic transmission.

### 2. Description of the Related Art

Vehicles provided with an engine connected to an automatic transmission have been sold. In such a vehicle, control of the automatic transmission needs to be performed in harmony with an operating state of the engine. Therefore, information on engine torque is necessary for the control of the automatic transmission.

Japanese Patent Application Publication No. JP (A) 2003-120801 discloses a power transmission apparatus which accurately calculates output torque of an engine. The power transmission apparatus disclosed in the Japanese Patent Application Publication No. JP (A) 2003-120801 includes a shifting mechanism which transmits rotational driving force of an engine while changing a speed thereof; a parameter setting device which variably sets a control parameter for controlling operation of the shifting mechanism; a reference indicated torque calculating portion which calculates reference indicated torque of the engine in a reference operating state, based on a rotational speed and a load of the engine; an actual indicated torque calculating portion which calculates actual indicated torque that is generated in an actual operating state, by correcting the reference indicated torque based on a difference between an operating parameter in the actual operating state of the engine and an operating parameter in the reference operating state of the engine; a friction torque calculating portion which calculates friction torque of the engine based on the rotational speed and the load of the engine; and a net torque calculating portion which calculates net torque of the engine by subtracting the friction torque calculated by the friction torque calculating portion from the actual indicated torque calculated by the actual indicated torque calculating portion. The parameter setting device sets the control parameter according to the net torque calculated by the net torque calculating portion.

In the power transmission device disclosed in the publication, the actual indicated torque is calculated by correcting the reference indicated torque in the reference operating state (i.e., the operating state based on the reference operating parameter), on the basis of the difference between the operating parameter in the actual operating state and the operating parameter in the reference operating state. Thus, no matter what operating parameter is used (that is, even in the case where the operating parameter is changed), it is possible to accurately calculate the actual indicated torque that is actually generated by the engine. In this case, only the reference indicated torque in the reference operating state and a correction coefficient for the operating parameter are necessary. Therefore, only a small amount of data is necessary for calculating the actual indicated torque. Thus, only small capacity of storage media (i.e., small capacity of ROM) is required. The net torque is calculated by subtracting the friction torque of the engine from the actual indicated torque that is calculated in the aforementioned manner. Thus, no matter what operating parameter is used, it is possible to accurately calculate the net torque. On the basis of the net torque, the parameter setting device sets the control parameter for controlling the operation of the shifting mechanism. Thus, it is possible to accurately set, for example, engagement capacity of a clutch in the shifting mechanism, which is set using the control parameter.

However, the net torque calculated by the power transmission apparatus disclosed in the aforementioned Japanese Patent Application Publication No. JP (A) 2003-120801 is not necessarily appropriate for the control of the automatic transmission. For example, in control of the engine, ignition timing may be changed. When the ignition timing is changed, the indicated torque (i.e., the torque generated by the engine) is suddenly changed. Since the indicated torque is suddenly changed, the net torque (the torque transmitted from the engine to the automatic transmission) that is calculated based on the indicated torque is suddenly changed. Thus, it is not necessarily appropriate to control the automatic transmission based on such net torque.

Further, since it is difficult to accurately obtain the friction torque, the friction torque is set to a value that is the most convenient when used for the control of the engine, among values in a variation range of the friction torque. For example, the friction torque is estimated at a high value in the variation range when the engine operating state is in a region where an engine stall may occur. When the net torque is calculated by subtracting such friction torque from the actual indicated torque, accuracy of the net torque is deteriorated. Thus, it is not necessarily appropriate to control the automatic transmission based on such net torque.

Further, in the control of the engine, fuel supply to the engine is stopped (i.e., fuel cut is performed), for example, when the engine is idling during running. Even during idling, stop of the fuel supply may be prohibited according to request from the automatic transmission. In this case, when stop of the fuel supply that has been prohibited is permitted, the fuel supply is stopped. Therefore, the indicated torque is suddenly changed. As a result, the net torque is suddenly changed. It is not necessarily appropriate to control the automatic transmission based on such net torque.

Further, in the control of the engine, the torque of the engine is controlled based on a torque correction amount that is calculated by idle speed control (hereinafter, referred to as "ISC") based on a difference between an actual rotational speed during idling and a target rotational speed during idling. Therefore, the indicated torque includes the torque correction amount that is calculated by the ISC. Accordingly, the net torque includes the torque correction amount that is calculated by the ISC. It is not necessarily appropriate to control the automatic transmission based on such net torque.

### SUMMARY OF THE INVENTION

The invention relates to a torque calculation method for an engine, which can calculate torque that is appropriate for control of an automatic transmission.

A first aspect of the invention relates to a torque calculation method for an engine connected to an automatic transmission. Plural cylinders are provided in the engine, and torque in each of the cylinders is controlled by changing ignition timing based on at least one of a change in a rotational speed of the engine and knocking of the engine. The torque calculation method includes a step of calculating first engine torque based on the rotational speed of the engine and the ignition timing in each of the cylinders; and a calculation step of calculating second engine torque which is used for control of the automatic transmission by performing a smoothing process for the first engine torque based on a change amount of the ignition timing in each of the cylinders.

According to the first aspect of the invention, the first engine torque (for example, actual indicated engine torque) is calculated based on the rotational speed of the engine. The actual indicated engine torque is torque that is actually generated by the engine. The actual indicated engine torque is changed when the ignition timing is changed in order to suppress hunting of the engine rotational speed or to suppress occurrence of knocking. For example, the actual indicated engine torque is repeatedly calculated, and the second engine torque (actual net engine torque) is calculated by performing the smoothing process, that is, by adding, to the actual indicated engine torque that was calculated last time, an additional value that is calculated based on a difference between the actual indicated engine torque that was calculated last time, and the actual indicated engine torque that is calculated this time. The actual net engine torque is torque that is actually transmitted from the engine to the automatic transmission. For example, the additional value becomes smaller as the change amount of the ignition timing becomes larger. Thus, even in a case where a change amount of the actual indicated engine torque is large, it is possible to obtain the actual net engine torque that is smoothly changed, by performing the smoothing process. Accordingly, it is possible to suppress a sudden change in the actual net engine torque. As a result, it is possible to provide the torque calculation method for an engine, which makes it possible to calculate the torque appropriate for the control of the automatic transmission.

According to a second aspect of the invention, in the torque calculation method for an engine according to the first aspect of the invention, the first engine torque is repeatedly calculated. The calculation step includes a step of calculating the second engine-torque by adding, to the first engine torque that was calculated last time, an additional value that is calculated based on a difference between the first engine torque that was calculated last time and the first engine torque that is calculated this time. The torque calculation method further includes a step of calculating the additional value such that the additional value becomes smaller as the change amount of the ignition timing becomes larger.

According to the second aspect of the invention, the actual indicated engine torque is repeatedly calculated. The actual net engine torque is calculated by performing the smoothing process, that is, by adding, to the actual indicated engine torque that was calculated last time, the additional value that is calculated based on the difference between the actual indicated engine torque that was calculated last time and the actual indicated engine torque that is calculated this time. The additional value becomes smaller as the change amount of the ignition timing becomes larger. Thus, even in the case where the change amount of the actual indicated engine torque is large, it is possible to obtain the actual net engine torque that is smoothly changed, by performing the smoothing process. Therefore, it is possible to suppress a sudden change in the actual net engine torque. As a result, it is possible to calculate the torque appropriate for the control of the automatic transmission.

A third aspect of the invention relates to a torque calculation method for an engine connected to an automatic transmission. The torque calculation method includes a step of calculating first engine torque based on a rotational speed of the engine; a step of calculating friction torque of the engine based on a temperature of coolant of the engine; a step of calculating second engine torque that is used for control of the automatic transmission by subtracting the friction torque from the first engine torque; and a step of correcting the second engine torque so that the second engine torque is increased based on a temperature of lubricant of the engine.

According to a third aspect of the invention, the first engine torque (for example, the actual indicated engine torque) is calculated based on the rotational speed of the engine. The friction torque is calculated based on the temperature of the coolant of the engine. The second engine torque (for example, the actual net engine torque) is calculated by subtracting the friction torque from the actual indicated engine torque.
The friction torque is used for the control of the engine, as well as in the control of the automatic transmission. Since the friction torque is changed due to a change in the temperature of the coolant and other various factors such as a change in a temperature of oil, a change in an amount of oil, a change in viscosity of oil, and a change over time, it is difficult to accurately calculate the friction torque. Therefore, if the friction torque is calculated at a low value in a variation range, an engine stall may occur. Therefore, for example, the friction torque is estimated at a high value in the variation range when an engine operating state is in an operating region where an engine stall or the like may occur. Accordingly, the actual net engine torque is calculated at a value lower than engine net torque that is actually transmitted from the engine to the automatic transmission. Therefore, the calculated actual net engine torque is corrected to be increased based on the temperature of the lubricant of the engine. Thus, it is possible to improve the accuracy of the actual net engine torque. Accordingly, the automatic transmission can be controlled using the accurate actual net engine torque. As a result, it is possible to provide the torque calculation method which makes it possible to calculate the torque appropriate for the control of the automatic transmission.

According to a fourth aspect of the invention, the torque calculation method for an engine according to the third aspect of the invention further include a coolant temperature detecting step of detecting the temperatures of the coolant of the engine at plural time points including a time point at which the engine is started; and a step of detecting the temperature of the lubricant of the engine, based on the temperatures of the coolant, which are detected at the plural time points including the time point at which the engine is started.

According to the fourth aspect of the invention, the temperatures of the coolant of the engine are detected at the plural time points including the time point at which the engine is started. The temperature of the lubricant varies depending not only the temperature of the coolant at present but also on the temperature of the coolant at the time point when the engine is started. Therefore, the temperature of the lubricant of the engine is detected based on the temperatures of the coolant, which are detected at the plural time points including the time point at which the engine is started. Thus, it is possible to accurately detect the temperature of the lubricant, and to accurately correct the actual net engine torque.

According to a fifth aspect of the invention, in the torque calculation method for an engine according to any one of the first aspect to the fourth aspect of the invention, fuel supply to the engine is stopped when a predetermined condition is satisfied; and the second engine torque is calculated considering the number of the cylinders for which fuel supply has been stopped.

According to the fifth aspect of the invention, it is possible to calculate the actual net engine torque, for example, by multiplying the actual indicated engine torque by (KA - KB) / KA, considering the number of the cylinders for which fuel supply has been stopped. KA is the number of all the cylinders, and KB is the number of the cylinders for which fuel supply has been stopped. Thus, it is possible to improve the accuracy of the actual net engine torque.

A sixth aspect of the invention relates to a torque calculation method for an engine connected to an automatic transmission. When a predetermined first condition is satisfied, fuel supply to the engine is stopped. When a predetermined second condition relating to the automatic transmission is satisfied, stop of the fuel supply is prohibited. The torque calculation method include a step of calculating first engine torque based on a rotational speed of the engine; a step of determining whether stop of the fuel supply is being prohibited; and a step of setting the first engine torque to torque for a case in which the fuel supply is stopped, and calculating second engine torque which is used for control of the automatic transmission, based on the first engine torque, in a case where stop of the fuel supply is being prohibited.

According to the sixth aspect of the invention, the first engine torque (for example, target indicated engine torque) is calculated based on the rotational speed of the engine. The target indicated engine torque is a target of the torque generated by the engine. For example, when the fuel supply to the engine is stopped while the engine is idling, the target indicated engine torque becomes equal to the target indicated engine torque for the case where the fuel supply is stopped (i.e., 0 N·m). Meanwhile, when the engine needs to race in order to synchronize the engine rotational speed and the rotational speed of the input shaft of the transmission, or to synchronize the rotational speed of the input shaft of the transmission and the rotational speed of the output shaft of the transmission during shifting, stop of the fuel supply is prohibited. In the case where stop of the fuel supply is being prohibited, even when the engine is idling, the fuel supply is not stopped, and the target indicated engine torque does not become 0 N·m. In this case, when shifting is completed and stop of the fuel supply that has been prohibited is permitted, the fuel supply is stopped upon completion of shifting, and the target indicated engine torque becomes 0 N·m. When the target indicated engine torque is suddenly changed upon completion of shifting, the second engine torque (for example, target net engine torque) that is calculated based on the target indicated engine torque is suddenly changed. The target net engine torque is a target of the torque that is transmitted from the engine to the automatic transmission. A sudden change in the target net engine torque is undesirable for the control of the automatic transmission. Therefore, in the case where the fuel supply is being prohibited, the target indicated engine torque is set to the value for the case where the fuel supply is stopped, and the target net engine torque is calculated based on the target indicated engine torque. Thus, in the case where the fuel supply is being prohibited, it is possible to calculate the target net engine torque for the case where the fuel supply is stopped. Therefore, when stop of the fuel supply that has been prohibited is permitted, it is possible to suppress a sudden change in the target net engine torque. As a result, it is possible to provide the torque calculation method for an engine, which makes it possible to calculate the torque appropriate for the control of the automatic transmission.

According to a seventh aspect of the invention, in the torque calculation method for an engine according to the sixth aspect of the invention, the first condition is a condition that the engine is idling; and the second condition is a condition that shifting of the automatic transmission is being performed. According to the seventh aspect of the invention, in a case where the engine is idling but stop of the fuel supply is being prohibited since shifting is being performed, it is possible to calculate the target net engine torque for the case where the fuel supply is stopped. Thus, when stop of the fuel supply that has been prohibited is permitted upon completion of shifting, it is possible to suppress a sudden change in the target net engine torque.

An eighth aspect of the invention relates to a torque calculation method for an engine connected to an automatic transmission. Torque of the engine is controlled so as to be equal to first engine torque that is calculated based on a rotational speed of the engine. The first engine torque is corrected so that the rotational speed during idling becomes equal to a predetermined rotational speed. The torque calculation method includes a step of calculating second engine torque which is used for control of the automatic transmission, based on the first engine torque; and a step of correcting the second engine torque based on a correction amount of the first engine torque.

According to the eighth aspect of the invention, the second engine torque (for example, the target net engine torque) is calculated based on the first engine torque (for example, the target indicated engine torque) which is calculated based on the rotational speed of the engine. The torque of the engine is controlled based on the target indicated engine torque. The target indicated engine torque is corrected so that the rotational speed during idling becomes equal to the predetermined rotational speed. Therefore, the target net engine torque is changed according to the correction amount of the target indicated engine torque. Since the target net engine torque is changed based on the rotational speed during idling, the change in the target net engine torque does not reflect driver's intention. Therefore, the change in the target net engine torque is not desirable for the automatic transmission, which needs to be controlled reflecting the driver's intention. Accordingly, the target net engine torque is corrected based on the correction amount of the target indicated engine torque, for example, by subtracting torque equivalent to the correction amount from the target net engine torque. Thus, it is possible to exclude the torque equivalent to the correction amount included in the target net engine torque. Therefore, it is possible to obtain the target net engine torque reflecting the driver's intention. As a result, it is possible to provide the torque calculation method for an engine, which makes it possible to calculate the torque appropriate for the control of the automatic transmission.

According to a ninth aspect of the invention, in the torque calculation method for an engine according to any one of the first aspect to the eighth aspect of the invention, the rotational speed of the engine during idling is controlled so as to be equal to a predetermined rotational speed, based on a predetermined torque correction amount which is set based on the rotational speed; and the second.engine torque is calculated considering the predetermined torque correction amount.

According to the ninth aspect of the invention, the rotational speed of the engine during idling is controlled so as to be equal to the predetermined rotational speed based on the predetermined torque correction amount (for example, idling torque deviation learning value) which is set based on the rotational speed. The idling torque deviation learning value is an integration term for the torque correction amount that is calculated based on a deviation between the actual rotational speed during idling and the target rotational speed during idling. The idling torque deviation learning value is stored in a computer as a torque deviation amount during idling. The torque of the engine is controlled so as to be increased or decreased by the idling torque deviation learning value. The torque correction amount based on the idling torque deviation learning value is used for operating the engine itself. Therefore, the torque correction amount based on the idling torque deviation learning value is not included in the net torque transmitted from the engine to the automatic transmission. Accordingly, the actual net engine torque or the target net engine torque is calculated considering the idling torque deviation learning value. Thus, it is possible to improve accuracy of the actual net engine torque or the target net engine torque.

A torque calculation method for an engine according to a tenth aspect of the invention is the torque calculation method for an engine according to any one of the first aspect to the eighth aspect of the invention, in which the second engine torque is calculated considering pumping loss of the engine.

According to the tenth aspect of the invention, the actual net engine torque or the target net engine torque is calculated, considering the pumping loss that is used for operating the engine itself, and that is not included in the net torque transmitted from the engine to the automatic transmission. Thus, it is possible to improve accuracy of the actual net engine torque or the target net engine torque.

### BRIEF DESCRIPTION OF THE DRAWINGS

FIG. 1 is a control block diagram showing a vehicle including an ECU which performs computation using a torque calculation method for an engine according to a first embodiment of the invention;

FIG. 2 is a control block diagram showing an engine controlled by the ECU which performs computation using the torque calculation method for an engine according to the first embodiment of the invention;

FIG. 3 is a diagram showing a clutch;

FIG. 4 is a flowchart showing a control structure of a program executed by the ECU which performs computation using the torque calculation method for an engine according to the first embodiment of the invention; and

FIG. 5 is a flowchart showing a control structure of a program executed by the ECU which performs computation using a torque calculation method for an engine according to a second embodiment of the invention.

### DETAILED DESCRIPTION OF THE EXEMPLARY EMBODIMENTS

Hereinafter, embodiments of the invention will be described with reference to the drawings. In the following description, the same components are denoted by the same reference numerals. Names and functions thereof are the same. Therefore, detailed description thereof will not be repeated.

### (First embodiment)

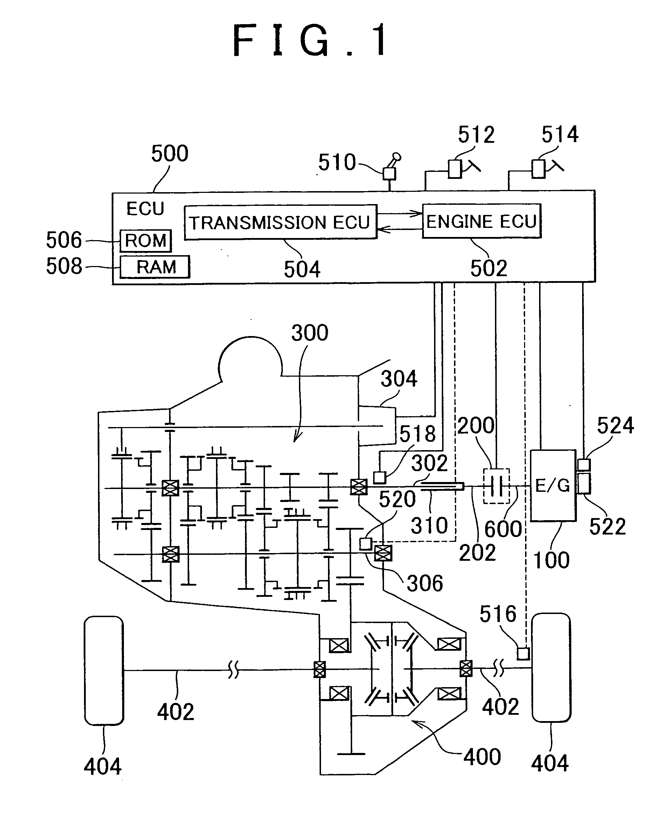

Referring to FIG. 1, description will be made of a vehicle including an electronic control unit (hereinafter, referred to as "ECU") 500 which performs computation using a torque calculation method for an engine according to an embodiment of the invention. The vehicle runs when driving force generated by an engine 100 is transmitted to a vehicle wheel 404 via a clutch 200, a transmission 300, a differential gear 400, and a drive shaft 402. The engine 100, the clutch 200, and the transmission 300 are controlled by the ECU 500.

The engine 100 is a four-cylinder gasoline engine. The number of the cylinders of the engine 100 may be a number other than 4. The clutch 200 is connected to a crankshaft 600 of the engine 100. A clutch output shaft 202 is connected to an input shaft 302 of the transmission 300 via a spline 310.

The transmission 300 includes a constant-mesh gear train. A shift speed of the transmission 300 is selected by sliding a shift fork shaft by an actuator 304. The actuator 304 may be operated by hydraulic pressure or by electric power. The shift speed may be selected by an actuator using a concentric slave cylinder.

The ECU 500 includes an engine ECU 502, a transmission ECU 504, read only memory (hereinafter, referred to as "ROM") 506, and random access memory (hereinafter, referred to as "RAM") 508. The engine ECU 502 controls the engine 100. In this embodiment, the engine ECU 502 controls torque of the engine 100 based on target indicated engine torque that is set based on a rotational speed of the engine, an accelerator pedal operation amount, and the like.

In the engine 100, hunting of the rotational speed may occur due to influence of external disturbance or the like, even if the torque is constant. In such a case, the engine ECU 502 decides a torque correction amount (anti-jerk correction amount) based on a difference between a theoretical rotational speed (i.e., a rotational speed decided based on the target indicated engine torque) and the actual engine rotational speed, in order to stabilize the engine rotational speed. The engine ECU 502 changes the ignition timing of the engine 100 (i.e., the engine ECU 502 retards or advances the ignition timing of the engine 100) so as to change the torque by the decided torque correction amount.

Also, when knocking occurs in the engine 100, the engine ECU 502 repeatedly retards the ignition timing of a cylinder in which knocking occurs by a predetermined angle until occurrence of knocking is stopped. After occurrence of knocking is stopped, the engine ECU 502 repeatedly advances the retarded ignition timing by a predetermined angle. Such control is referred to as "knock control".

When the ignition timing is retarded or advanced, the torque of the engine 100 is changed. The change in the torque of the engine 100 is noticeable particularly when the ignition timing is changed by the anti-jerk correction.

Also, the engine ECU 502 performs the ISC so that the engine rotational speed during idle becomes equal to a predetermined target rotational speed. In the ISC, the torque of the engine 100 is controlled based on the torque correction amount that is calculated based on the difference between the actual rotational speed during idling and the target rotational speed during idling. The calculated torque correction amounts are integrated. That is, the torque of the engine 100 is controlled based on an integration term for the torque correction amount. When the rotational speed during idling is higher than the target rotational speed, the torque of the engine 100 is controlled so as to be decreased. When the rotational speed during idling is lower than the target rotational speed, the torque of the engine 100 is controlled so as to be increased.

When a learning condition is satisfied, the integration term set by the ISC is stored in the RAM 508 as an idling torque deviation learning value. The torque of the engine 100 is controlled to so as to be increased or decreased by the idling torque deviation learning value.

Further, the engine ECU 502 performs fuel cut when a predetermined idling time fuel cut performing condition is satisfied. The predetermined idling time fuel cut performing condition includes a condition that the engine 100 is idling. As the idling time fuel cut performing condition, an ordinary condition is used. Therefore, detailed description of the idling time fuel cut performing condition will be omitted.

The transmission ECU 504 controls the clutch 200 and the transmission 300. In this embodiment, the transmission ECU 504 controls the transmission 300 in a shifting control mode when shifting of the transmission 300 is performed. In the case where the transmission ECU 504 controls the transmission 300 in the shifting control mode, the transmission ECU 504 controls the clutch 200 so that the clutch 200 is disengaged, for example, when actual net engine torque of the engine 100 decreases to approximately 0 N.m. The actual net engine torque is torque obtained by subtracting the friction torque of the engine 100, pumping loss, load torque of auxiliary machinery, and the idling torque deviation learning value from torque that is actually generated by the engine 100 (i.e., actual indicated engine torque). The actual net engine torque is calculated as the torque that is transmitted from the engine 100 to the transmission 300.

When the clutch 200 is in the disengaged state, the transmission ECU 504 controls the transmission 300 so as to change the shift speed. When change in the shift speed is completed, the transmission ECU 504 controls the clutch 200 so that the clutch 200 is engaged. However, the control of the clutch 200 and the transmission 300 in the shifting control mode is not limited to the control described above.

Signals are sent and received between the engine ECU 502 and the transmission ECU 504. In this embodiment, the engine ECU 502 calculates the actual net engine torque which is used for control of the transmission 300, and sends the actual net engine torque to the transmission ECU 504. The transmission ECU 504 controls the transmission 300 using the actual net engine torque sent from the engine ECU 502.

In this embodiment, when shifting is performed, the transmission ECU 504 starts to disengage the clutch 200. When the clutch 200 is in a semi-engaged state, the ECU 504 decides engagement torque of the clutch 200 based on the actual net engine torque that is sent from the engine ECU 502. Also, the transmission ECU 504 estimates a time point at which the actual net engine torque becomes, for example, approximately 0 N·m based on a rate of change (i.e., inclination of change) in the actual net engine torque that is sent from the engine ECU 502. Then, the transmission ECU 504 controls the clutch 200 so that the clutch 200 is disengaged in accordance with the time point.

The ROM 506 stores programs executed by the ECU 500, maps used by the ECU 500, and the like. In this embodiment, the transmission ECU 504 determines whether to control the transmission 300 in the shifting control mode, based on a shift diagram stored in the ROM 506 or shift operation performed by a driver. The RAM 508 stores results of computation performed by the ECU 500.

The ECU 500 receives signals from a position sensor 510, an accelerator pedal operation amount sensor 512, a brake switch 514, a vehicle speed sensor 516, an input shaft rotational speed sensor 518, an output shaft rotational speed sensor 520, and a crank position sensor 524 which is provided so as to be opposed to an outer periphery of a timing rotor 522.

The position sensor 510 detects a shift position of a shift lever. The accelerator pedal operation amount sensor 512 detects an operation amount of an accelerator pedal. The brake switch 514 detects whether a brake pedal has been depressed. The vehicle speed sensor 516 detects a vehicle speed. The input shaft rotational speed sensor 518 detects a rotational speed of the input shaft of the transmission 300. The output shaft rotational speed sensor 520 detects a rotational speed of an output shaft of the transmission 300. The crank position sensor 524 detects the engine rotational speed.

The ECU 500 performs computation based on the signals sent from the sensors, the programs and maps stored in the ROM 506, and the like. In this embodiment, the ECU 500 performs shifting (upshifting and downshifting) based on the shift operation performed by the driver. The ECU 500 may perform shifting based on operation of a switch provided in a steering wheel (not shown), instead of the shift operation.

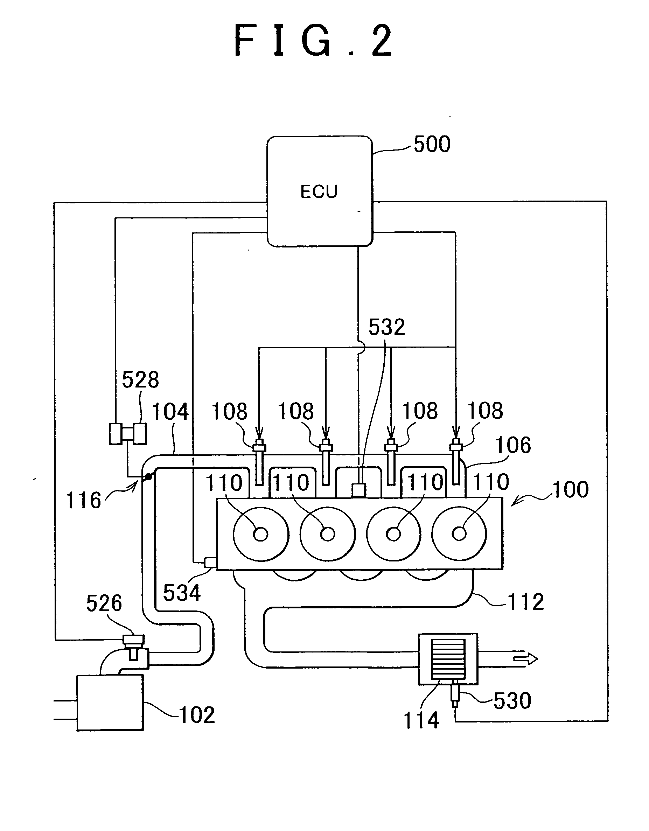

Referring to FIG. 2, the engine 100 will be further described. Air taken into the engine 100 is filtered by an air cleaner 102. Then, the air passes through an intake pipe 104 and an intake manifold 106, and is introduced into a combustion chamber together with fuel injected from an injector 108.

In the combustion chamber, air-fuel mixture is ignited by an ignition plug 110, and is burned. When the air-fuel mixture is burned, driving force is generated by the engine 100. The burned air-fuel mixture, that is, exhaust gas is guided to an exhaust manifold 112, and purified by a catalyst 144. Then, the exhaust gas is discharged to the outside of a vehicle.

The air introduced in the combustion chamber is controlled by a throttle valve 116. The throttle valve 116 is an electronically controlled throttle valve that is driven by a motor. An opening amount of the throttle valve 116 is controlled by the ECU 500. A flow rate of air is detected by an air flow meter 526, and a signal indicative of the result of detection is sent to the ECU 500.

The engine ECU 502 of the ECU 500 calculates filling efficiency of the engine 100 based on the flow rate of air detected by the air flow meter 526, using a theoretical equation that is stored in the ROM 506 in advance. The filling efficiency may be calculated based on pressure of air using a theoretical equation.

The opening amount of the throttle valve 116 is detected by a throttle opening amount sensor 528, and a signal indicative of the result of detection is sent to the ECU 500. A temperature TC of the catalyst 114 is detected by a temperature sensor 530, and a signal indicative of the result of detection is sent to the ECU 500. The catalyst temperature TC may be estimated based on the engine rotational speed, the load, a temperature of coolant, a temperature of intake air, and the like, instead of detecting the catalyst temperature TC using the temperature sensor 530.

Knocking which occurs in the engine 100 is detected by a knock sensor 532, and a signal indicative of the result of detection is sent to the ECU 500. The temperature of the coolant of the engine 100 is detected by a coolant sensor 534, and a signal indicative of the result of detection is sent to the ECU 500. The engine ECU 502 of the ECU 500 detects (estimates) a temperature of lubricant of the engine 100 based on a temperature of the coolant that is detected at a time point which the engine 100 is started, and a present temperature of the coolant.

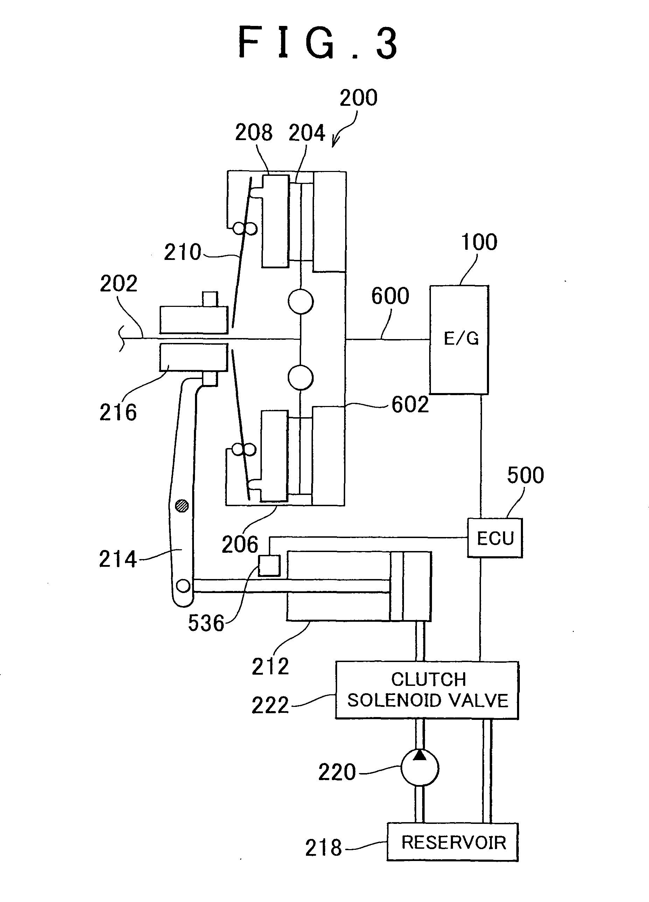

Referring to FIG. 3, the clutch 200 will be further described. The clutch 200 is a dry type single plate friction clutch. As shown in FIG. 3, the clutch 200 includes a clutch output shaft 202, a clutch disk 204 provided on the clutch output shaft 202, a clutch housing 206, a pressure plate 208 provided in the clutch housing 206, a diaphragm spring 210, a clutch release cylinder 212, a release fork 214, and a release sleeve 216.

When the diaphragm spring 210 applies force to the pressure plate 208 rightward in FIG. 3, the clutch disk 204 is pressed to a fly wheel 602 fitted to the crankshaft 600 of the engine 100, and thus the clutch is engaged.

When the clutch release cylinder 212 moves the release sleeve 216 rightward in FIG. 3 via the release fork 214, an inner end portion of the diaphragm spring 210 is moved rightward in FIG. 3. When the inner end portion of the diaphragm spring 210 is moved rightward in FIG. 3, the pressure plate 208 is moved leftward in FIG. 3, and the clutch disk 204 is separated from the fly wheel 602. Thus, the clutch is disengaged.

The clutch release cylinder 212 is operated when hydraulic pressure of hydraulic oil pumped up by a hydraulic pump 220 from a reservoir 218 is supplied to the clutch release cylinder 212 via a clutch solenoid valve 222. The clutch solenoid valve 222 switches between supply of the hydraulic pressure to the clutch release cylinder 212 and discharge of the hydraulic pressure from the clutch release cylinder 212. The clutch solenoid valve 222 is controlled by the ECU 500.

When the hydraulic pressure is supplied to the clutch release cylinder 212, a piston of the clutch release cylinder 212 is moved leftward in FIG. 3, and the release sleeve 216 is moved rightward in FIG. 3. Thus, the clutch is disengaged. The position of the piston of the clutch release cylinder 212 (i.e., clutch stroke) is detected by a clutch stroke sensor 536. A signal indicative of the result of detection performed by the clutch stroke sensor 536 is sent to the ECU 500.

The ECU 500 detects whether the clutch 200 is in a disengaged state, in an engaged state, or in a semi-engaged state, based on the signal sent from the clutch stroke sensor 536. The clutch 200 may be operated by electric power.

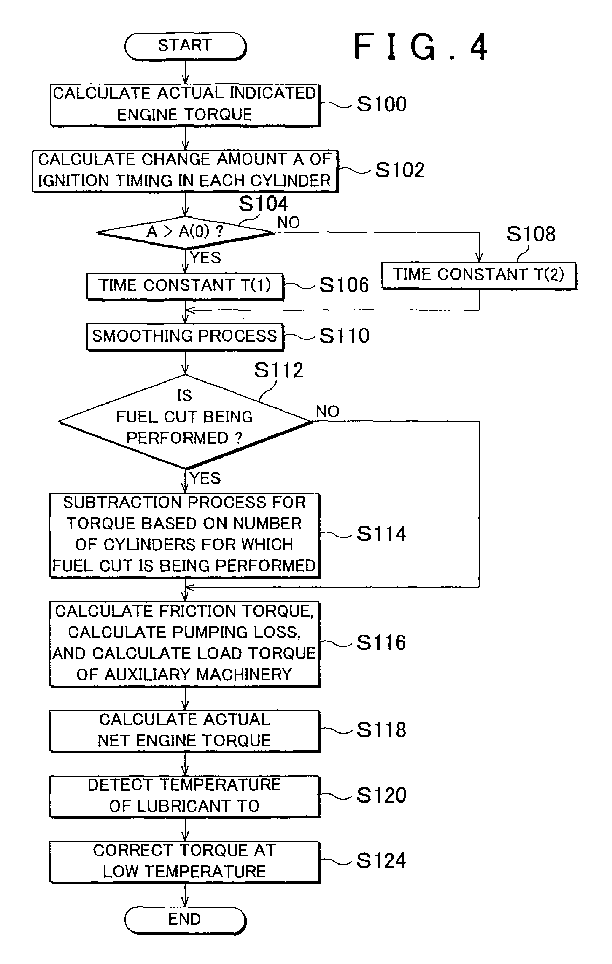

Referring to FIG. 4, description will be made of a control structure of a program executed by the ECU 500 which performs computation using the torque calculation method for an engine according to the embodiment of the invention.

In step S100, the ECU 500 calculates actual indicated engine torque TZ. The actual indicated engine torque TZ is calculated using a two-dimensional map based on the engine rotational speed and the filling efficiency. The engine rotational speed is detected based on the signal sent from the crank position sensor 524. The filling efficiency is calculated based on the flow rate of air detected by the air flow meter 526.

In step S102, the ECU 500 calculates the torque correction amount in each cylinder, that is, a change amount A of the ignition timing in each cylinder. The change amount A of the ignition timing is an absolute value of an angle by which the ignition timing is changed by the anti-jerk correction.

In step S104, the ECU 500 determines whether the change amount A of the ignition timing is larger than a predetermined change amount A(0). When the change amount A of the ignition timing is larger than the predetermined change amount A(0) ("YES" in step S104), the ECU 500 performs step S106. When the change amount A of the ignition timing is equal to or smaller than the predetermined change amount A(0) ("NO" in step S108), the ECU 500 performs step S108.

In step S106, the ECU 500 sets a time constant T to T(1). The time constant T is used in a smoothing process for the actual indicated engine torque TZ that is performed in step S110 described later. In step S108, the ECU 500 sets the time constant T to T(2) (T(1) is greater than T(2); T(1) > T(2)).

In this embodiment, the time constant T used in the smoothing process is set according to a magnitude of the change amount of the ignition timing based on the anti-jerk correction. However, the time constant T may be set according to a magnitude of the change amount of the ignition timing set by the knock control. In this case, four time constants may be provided according to combinations of magnitudes of the change amount of the ignition timing based on the anti-jerk correction, and magnitudes of the change amount of the ignition timing set by the knock control.

In step S110, the ECU 500 performs the smoothing process for the actual indicated engine torque, for example, using an equation, TS = TZ (J - 1) + (TZ (J - 1) - TZ(J)) × ES / T. In this equation, TS is an output value that is calculated by the smoothing process; TZ (J - 1) is the actual indicated engine torque TZ that was calculated last time; TZ(J) is the actual indicated engine torque TZ that is calculated this time; and ES is a computation cycle at which this process is performed; and T is the time constant.

In step S112, the ECU 500 determines whether fuel supply is being stopped (i.e., fuel cut is being performed). When fuel cut is being performed ("YES" in step S112), the ECU 500 performs step S114. When fuel cut is not being performed ("NO" in step S112), the ECU 500 performs step S116.

In step S114, the ECU 500 performs a subtraction process for the output value TS based on the number of the cylinders for which fuel cut is being performed. The ECU 500 performs the subtraction process for the output value TS by multiplying the output value TS by (KA - KB) / KA. KA is the number of all the cylinders, and KB is the number of the cylinders for which fuel cut is being performed.

In step S116, the ECU 500 calculates the friction torque of the engine 100, the pumping loss, and the load torque of the auxiliary machinery. Each of the friction torque and the pumping loss is calculated by correcting a value that is calculated using the two-dimensional map based on the engine rotational speed and the filling efficiency, by the temperature of the coolant and the atmospheric pressure. Since it is difficult to accurately calculate the friction torque, the friction torque is set to a value that is the most convenient when used for the control of the engine, among values in a variation range of the friction torque. For example, the friction torque is set to a value higher than a median value in the variation range when the engine operating state is in an operating region where an engine stall may occur. The load torque of the auxiliary machinery is calculated using a one-dimensional map based on the engine rotational speed. Each of the methods of calculating the friction torque, the pumping loss, and the load torque of the auxiliary machinery is not limited to the method described above.

In step S118, the ECU 500 subtracts the friction torque of the engine 100, the pumping loss, the load torque of the auxiliary machinery, and the idling torque deviation learning value from the output value TS or the output value TS that has been subjected to the subtraction process, whereby the actual net engine torque is calculated.

In step S120, the ECU 500 detects a temperature TO of the lubricant based on a temperature of the coolant of the engine 100 at a time point when the engine 100 is started and a present temperature of the coolant, using the two-dimensional map stored in the ROM 506. The temperatures of the coolant are detected by the coolant sensor 534.

In step S124, the ECU 500 corrects the friction torque so that the friction torque is decreased, and corrects the actual net engine torque which is calculated by subtracting the friction torque from the actual indicated engine torque so that the actual net engine torque is increased. The ECU 500 corrects the friction torque that has been set to a value higher than the median value in a predetermined range so that the friction torque is decreased to the median value in the predetermined range.

Description will be made of operation of the ECU 500 which performs computation using the torque calculation method for an engine according to the embodiment of the invention, based on the aforementioned structure and the aforementioned flowchart.

While a vehicle system is being started, the actual indicated engine torque TZ is calculated in step S100, and the torque correction amount in each cylinder based on the anti-jerk correction, that is, the change amount A of the ignition timing in each cylinder, in step S102.

In the case where the change amount A of the ignition timing is larger than the predetermined change amount A(0) ("YES" in step S104), the difference between the actual indicated engine torque TZ (J - 1) that was calculated last time and the actual indicated engine torque TZ(J) that is calculated this time is large. In this case, the time constant T used in the smoothing process for the indicated torque is set to the time constant T(1) which is larger than the time constant T(2), in step S104. Therefore, the value of (TZ (J - 1) - TZ(J)) × ES / T, which is the second term of the equation used in the smoothing process in step S110, is reduced. Accordingly, a change amount of the calculated output value TS is reduced. Even when the change amount A of the ignition timing is large, it is possible to obtain the output value TS that is smoothly changed.

Meanwhile, in the case where the change amount A of the ignition timing is small, the difference between the actual indicated engine torque TZ (J - 1) that was calculated last time and the actual indicated engine torque TZ(J) that is calculated this time is not large. In this case, even if the value of (TZ (J - 1) - TZ(J)) × ES / T, which is the second term of the aforementioned equation, is not so reduced as in the case where the change amount A of the ignition timing is large, it is possible to obtain the output value TS that is smoothly changed. Accordingly, the time constant T is set to the time constant T(2) which is smaller than the time constant T(1). Thus, the output value TS is calculated by the smoothing process using the time constant T(2) in step S110.

After the smoothing process is performed on the actual indicated engine torque TZ in step S110, and the output value TS is calculated, it is determined whether fuel cut is being performed in step S112. When it is determined that fuel cut is being performed ("YES" in step S112), the actual torque of the engine 100 is decreased by fuel cut. Therefore, the subtraction process for the output value TS is performed in step S114. The following description will be made based on the assumption that fuel cut is being performed for two cylinders among the four cylinders. In this case, the output value TS is multiplied by two-fourths (one-second). When fuel cut is not being performed ("NO" in step S112), the subtraction process is not performed in step S114.

After the subtraction process for the output value TS is performed in step S114, the friction torque of the engine 100, the pumping loss, and the load torque of the auxiliary machinery are calculated in step S116. The actual net engine torque is calculated by subtracting the friction torque of the engine 100, the pumping loss, the torque of the auxiliary machinery, and the idling torque deviation learning value from the output value TS, in step S118.

The calculated friction torque is used for the control of the engine 100, as well as in the control of the transmission 300. If the friction torque is estimated at a low value in the variation range, the torque of the engine 100 is calculated at a value higher than the actual torque of the engine 100. In this case, an engine stall may occur. Therefore, for example, when the engine operating state is in the operating region where an engine stall may occur, the friction torque is set to a value higher than the median value in the predetermined range, that is, the friction torque is estimated at a high value in the variation range. The deviation between the actual friction torque and the calculated friction torque becomes larger as the difference between the temperature of the lubricant of the engine 100 and the temperature of the coolant of the engine 100 becomes larger.

When the actual net engine torque that is used for the control of the transmission 300 is calculated by subtracting such friction torque from the actual indicated engine torque TZ, the actual net engine torque is calculated at a value lower than the torque that is actually transmitted to the transmission 300.

In order to correct such actual net engine torque, the temperature TO of the lubricant of the engine 100 is detected using the two-dimensional map based on the temperature of the coolant of the engine 100 at the time point at which the engine 100 is started, and the present temperature of the coolant, in step S120. The friction torque is corrected so as to be decreased according to the difference between the temperature TO of the lubricant and the temperature of the coolant. Also, as another method, a friction torque correction amount may be directly set in this two-dimensional map, without setting the temperature of the lubricant in this two-dimensional map. Thus, the actual net engine torque, which is calculated by subtracting the friction torque from the actual indicated engine torque TZ, is corrected so as to be increased, in step S124. Thus, accuracy of the actual net engine torque can be improved.

As described above, the ECU which performs computation using the torque calculation method for an engine according to this embodiment performs the smoothing process for the actual indicated engine torque TZ using the large time constant T(1), thereby calculating the output value TS when the change amount of the ignition timing in each cylinder is large. On the basis of the output value TS, the actual net engine torque is calculated. Thus, even when the change amount of the actual indicated engine torque TZ is large since the change amount of the ignition timing is large, it is possible to obtain the actual net engine torque that is smoothly changed.

Also, after the ECU calculates the actual net engine torque by subtracting the friction torque of the engine from the output value TS, the ECU corrects the actual net engine torque so that the actual net engine torque is increased, by correcting the friction torque so that the friction torque is decreased based on the temperature of the lubricant of the engine. Thus, it is possible to improve the accuracy of the friction torque that is estimated at a high value in the variation range, and to obtain the actual net engine torque with high accuracy.

### (Second embodiment)

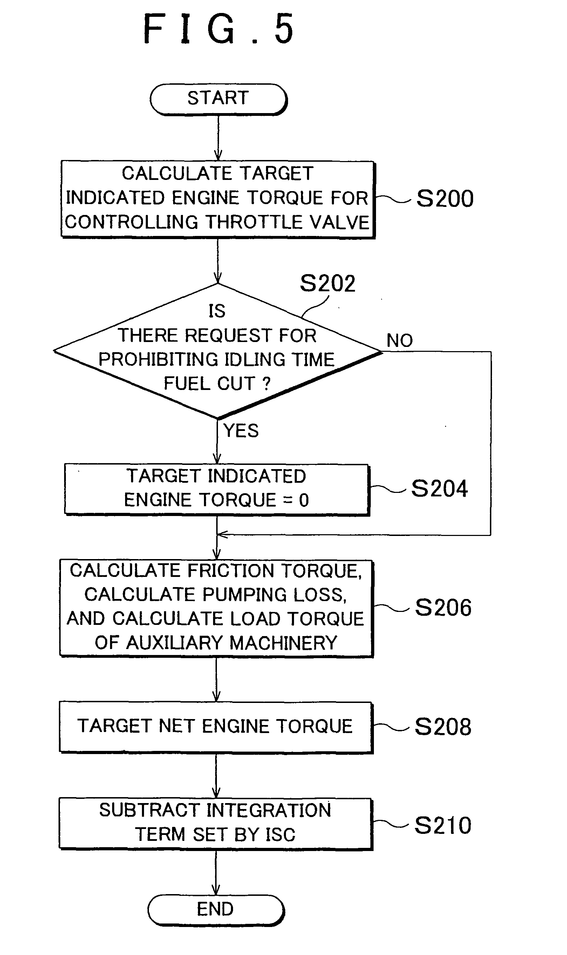

Referring to FIG. 5, a second embodiment of the invention will be described. In the aforementioned first embodiment, the ECU calculates the actual net engine torque that is actually transmitted from the engine 100 to the transmission 300. In the second embodiment, the ECU calculates target net engine torque that is a target of the net engine torque transmitted from the engine 100 to the transmission 300, in addition to the actual net engine torque.

Other portions of the control structure and functions thereof are the same as in the aforementioned first embodiment. Therefore, detailed description thereof will be omitted.

Referring to FIG. 5, description will be made of a control structure of a program executed by the ECU 500 which performs computation using a torque calculation method for an engine according to the second embodiment of the invention. The ECU 500 executes a program described below, in addition to the program in the aforementioned first embodiment.

In step S200, the ECU 500 calculates the target indicated engine torque that is used for controlling the throttle valve 116, based on the accelerator pedal operation amount detected by the accelerator pedal operation amount sensor 512, and the engine rotational speed detected by the crank position sensor. The target indicated engine torque is calculated using the map stored in the ROM 506.

In step S202, the ECU 500 determines whether there is a request for prohibiting idling time fuel cut in the case where the idling time fuel cut performing condition is satisfied. The ECU 500 determines whether there is the request for prohibiting the idling time fuel cut, based on the signal that is sent from the transmission ECU 504 to the engine ECU 502.

The transmission ECU 504 prohibits the idling time fuel cut when the engine needs to race in order to synchronize the engine rotational speed and the rotational speed of the input shaft of the transmission 300, or to synchronize the rotational speed of the input shaft of the transmission 300 and the rotational speed of the output shaft of the transmission 300 for performing shifting. When the idling time fuel cut needs to be prohibited, the transmission ECU 504 sends a prohibition request signal to the engine ECU 502.

When there is the request for the idling time fuel cut from the transmission ECU 504 ("YES" in step S202), step S204 is performed. When there is no request for the idling time fuel cut ("NO" in step S202), step S206 is performed.

In step S204, the ECU 500 sets the target indicated engine torque to a value for a case where fuel cut is performed, that is, 0 N·m. The value for the case where fuel cut is performed may be a value other than 0 N·m. In step S206, the ECU 500 calculates the friction torque of the engine 100, the pumping loss, and the load torque of the auxiliary machinery.

In step S208, the ECU 500 calculates the target net engine torque by subtracting the friction torque of the engine 100, the pumping loss, the load torque of the auxiliary machinery, and the idling torque deviation learning value from the target indicated engine torque. In step S210, the ECU 500 corrects the target net engine torque by subtracting the torque equivalent to the integration term set by the ISC, from the calculated target net engine torque.

Description will be made of operation of the ECU 500 which performs computation using the torque calculation method for an engine according to this embodiment of the invention, based on the aforementioned structure and the aforementioned flowchart.

While the vehicle system is being started, the target indicated engine torque that is used for controlling the throttle valve 116 is calculated in step S200, using the map based on the accelerator pedal operation amount and the engine rotational speed.

The target indicated engine torque becomes 0 N·m when the idling time fuel cut performing condition is satisfied, and fuel cut is being performed while the engine 100 is idling.

Meanwhile, even in the case where the idling time fuel cut performing condition is satisfied, when there is the request for prohibiting the idling time fuel cut from the transmission ECU 504 during shifting of the transmission 300, fuel cut is not performed. Therefore, the target indicated engine torque does not become 0 N.m.

In this situation, that is, in the situation where the idling time fuel cut performing condition is satisfied, and there is the request for prohibiting the idling time fuel cut, when shifting of the transmission 300 is completed, the request for prohibiting the idling time fuel cut is canceled. In this case, fuel cut is performed upon completion of shifting, and the target indicated engine torque becomes 0 N·m.

The transmission ECU 504 calculates torque which the transmission ECU 504 requests the engine 100 to generate, based on the target net engine torque calculated based on the target indicated engine torque. Therefore, if the target indicated engine torque is suddenly changed upon completion of shifting, a problem may occur in the control of the transmission 300.

Accordingly, in the case where there is the request for prohibiting the idling time fuel cut from the transmission ECU 504 ("YES" in step S202), the target indicated engine torque is set in advance to the value for the case where fuel cut is performed, that is, 0 N.m, in step S204.

The friction torque of the engine 100, the pumping loss, and the load torque of the auxiliary machinery are calculated in step S206. The friction torque of the engine 100, the pumping loss, the load torque of the auxiliary machinery, and the idling torque deviation learning value are subtracted from the target indicated engine torque. Thus, the target net engine torque is calculated in step S208.

The target net engine torque is calculated based on the target indicated engine torque for controlling the throttle valve. Since the torque of the engine 100 is corrected by the ISC, the integration term for the torque correction amount is added to the target indicated engine torque. Accordingly, the target net engine torque includes the integration term for the torque correction amount set by the ISC.

The integration term is calculated irrespective of the driver's intention. The target net engine torque including the integration term is not appropriate for the control of the transmission 300, since the transmission 300 needs to be controlled reflecting the driver's intention (that is, the rotational speed of the transmission 300 needs to be accelerated or decelerated according to the driver's request).

Thus, the torque equivalent to the integration term for the torque correction amount set by the ISC is subtracted from the calculated target net engine torque, in step S210. Thus, the target net engine torque can be calculated reflecting the driver's intention more appropriately.

As described above, the ECU which performs computation using the torque calculation method for an engine according to the second embodiment of the invention calculates the target net engine torque used for the control of the transmission by subtracting the friction torque of the engine 100, the pumping loss, the load torque of the auxiliary machinery, and the idling torque deviation learning value from the target indicated engine torque. In the situation where the idling time fuel cut performing condition is satisfied, when there is the request for prohibiting fuel cut, the ECU calculates the target net engine torque using the target indicated engine torque as the torque for the case where fuel cut is performed. Thus, it is possible to calculate in advance the target net engine torque for the case where fuel cut is performed upon completion of shifting.

Also, the ECU corrects the target net engine torque by subtracting the torque equivalent to the integration term for the torque correction amount that is calculated by the ISC, from the calculated target net engine torque. Thus, it is possible to obtain the target net engine torque reflecting the driver's intention more appropriately.

Thus, the embodiments of the invention that have been disclosed in the specification are to be considered in all respects as illustrative and not restrictive. The technical scope of the invention is defined by claims, and all changes which come within the meaning and range of equivalency of the claims are therefore intended to be embraced therein.

There may be provided a calculation method for an engine (100) connected to an automatic transmission (300), wherein plural cylinders are provided in the engine (100), and torque in each of the cylinders is controlled by changing ignition timing based on at least one of a change in a rotational speed of the engine (100) and knocking of the engine (100), the torque calculation method being characterized by comprising:
calculating first engine torque based on the rotational speed of the engine (100) and the ignition timing in each of the cylinders; and
calculating second engine torque which is used for control of the automatic transmission (300) by performing a smoothing process for the first engine torque based on a change amount of the ignition timing in each of the cylinders.

In the torque calculation method preferably:
the first engine torque is repeatedly calculated;
the calculation step includes a step of calculating the second engine torque by adding, to the first engine torque that was calculated last time, an additional value that is calculated based on a difference between the first engine torque that was calculated last time and the first engine torque that is calculated this time; and
the torque calculation method further includes a step of calculating the additional value such that the additional value becomes smaller as the change amount of the ignition timing becomes larger.

There may also be provided a torque calculation method for an engine (100) connected to an automatic transmission (300), characterized by comprising:
calculating first engine torque based on a rotational speed of the engine (100);
detecting friction torque of the engine (100) based on a temperature of coolant of the engine (100);
calculating second engine torque that is used for control of the automatic transmission (300) by subtracting the friction torque from the first engine torque; and
correcting the second engine torque so that the second engine torque is increased based on a temperature of lubricant of the engine (100).

The torque calculation method preferably further comprises
detecting the temperatures of the coolant of the engine (100) at plural time points including a time point at which the engine (100) is started; and
detecting the temperature of the lubricant of the engine (100), based on the temperatures of the coolant, which are detected at the plural time points including the time point at which the engine is started.

In the torque calculation method preferably:
fuel supply to the engine (100) is stopped when a predetermined condition is satisfied; and
the second engine torque is calculated considering the number of the cylinders for which fuel supply has been stopped.

There may also be provided a torque calculation method for an engine (100) connected to an automatic transmission (300), wherein when a predetermined first condition is satisfied, fuel supply to the engine (100) is stopped; and when a predetermined second condition relating to the automatic transmission (300) is satisfied, stop of the fuel supply is prohibited, the torque calculation method being characterized by comprising:
calculating first engine torque based on a rotational speed of the engine;
determining whether stop of the fuel supply is being prohibited; and
setting the first engine torque to torque for a case in which the fuel supply is stopped, and calculating second engine torque which is used for control of the automatic transmission, based on the first engine torque, in a case where stop of the fuel supply is being prohibited.

In the torque calculation method preferably the first condition is a condition that the engine (100) is idling; and the second condition is a condition that shifting of the automatic transmission (300) is being performed.

## Claims

1. A torque calculation method for an engine (100) connected to an automatic transmission (300), wherein torque of the engine (100) is controlled based on first engine torque that is calculated based on a rotational speed of the engine (100); and the first engine torque is corrected so that the rotational speed during idling becomes equal to a predetermined rotational speed, the torque calculation method being **characterized by** comprising:
calculating second engine torque which is used for control of the automatic transmission (300), based on the first engine torque; and
correcting the second engine torque based on a correction amount of the first engine torque.

2. The torque calculation method according to claim 1, wherein:
the rotational speed of the engine (100) during idling is controlled so as to be equal to a predetermined rotational speed, based on a predetermined torque correction amount which is set based on the rotational speed; and
the second engine torque is calculated considering the predetermined torque correction amount.

3. The torque calculation method according to claim 1 or 2, wherein the second engine torque is calculated considering pumping loss of the engine (100).
